(19) Europäisches Patentamt
European Patent Office
Office européen des brevets

(11) Publication number: 0 098 692 A2

# (12) EUROPEAN PATENT APPLICATION

(21) Application number: 83303301.2

(22) Date of filing: 08.06.83

(51) Int. Cl.³: G 06 F 7/50

(30) Priority: 01.07.82 US 394201

(43) Date of publication of application: 18.01.84 Bulletin 84/3

(84) Designated Contracting States: DE FR GB

(71) Applicant: Hewlett-Packard Company, Mail Stop 20 B-0 3000 Hanover Street, Palo Alto California 94043 (US)

(72) Inventor: McAllister, William Hays, 902 Sage Court, Cupertino CAlifornia 95014 (US)

(74) Representative: Oliver, Peter Anthony, Hewlett-Packard Limited Nine Mile Ride Easthampstead, Wokingham, Berkshire RG11 3LL (GB)

## (54) Apparatus for adding first and second binary operands.

(57) An efficient way to implement a binary adder on a large scale integrated (LSI) chip is disclosed. The logic path for both the sum and carry functions have been totally integrated and redundant input logic has been eliminated through the full utilization of MOS multiplexers (210-213). The result is a circuit with fewer transistors and a more compact and convenient layout over former techniques for any given length adder.

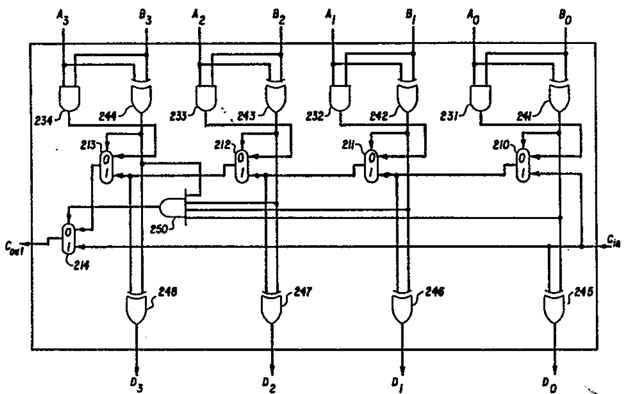


EP 0 098 692 A2

# APPARATUS FOR ADDING FIRST AND SECOND BINARY OPERANDS

This invention is concerned with apparatus for adding first and second binary operands.

A commonly required digital function is the fixed point adder with carry propagation. This operation may be implemented in a variety of ways depending upon the designer's choice regarding circuit layout area versus the speed of performing the addition.

The Boolean truth table for a one-bit full adder is shown in Table 1, where $A_i$ is the first operand, $B_i$ is the second operand, $C_i$ is the carry-in, $C_{i+1}$ is the carry-out, $D_i$ is the sum and $P_i$ is the propagate signal which is an intermediate signal used to produce both the sum and carry signals.

| $C_i$ | $A_i$ | $B_i$ | $P_i$ | $D_i$ | $C_{i+1}$ |
|---|---|---|---|---|---|
| 0 | 0 | 0 | 0 | 0 | 0 |
| 0 | 0 | 1 | 1 | 1 | 0 |
| 0 | 1 | 0 | 1 | 1 | 0 |
| 0 | 1 | 1 | 0 | 0 | 1 |
| 1 | 0 | 0 | 0 | 1 | 0 |
| 1 | 0 | 1 | 1 | 0 | 1 |
| 1 | 1 | 0 | 1 | 0 | 1 |
| 1 | 1 | 1 | 0 | 1 | 1 |

TABLE 1

The Boolean equations to implement Table 1 are:

$$P_i = A_i \text{ XOR } B_i$$
$$C_{i+1} = P_i * C_i + \overline{P}_i * B_i$$
$$D_i = P_i \text{ XOR } C_i$$

where "XOR" is the Boolean "exclusive-or", "*" is the Boolean "and", and "+" is the Boolean "or" function. The outputs $C_{i+1}$ and $D_i$ are generated from $A_i$, $B_i$ and $C_i$ and from the intermediate propagate term $P_i$ and its inverse $\overline{P}_i$.

An adder thus comprises circuits which perform two major functions -- summation and carry. Conventional designs construct these two functions as separate circuits which must be wired together. The wires or other electrical couplings running between the sum and carry functions give rise to redundant logic in each function which is essentially eliminated if the two functions are integrated as disclosed in the present invention.

The present invention provides apparatus for adding first and second binary operands each having a nominal length of N bits and a carry-in signal, and for providing a sum output signal having N bits and a carry-out signal, said apparatus comprising first logic means having a first input coupled to a bit signal of the first operand and a second input coupled to a bit signal of the second operand for providing one or more output signals in response to predetermined logical operation; selective gating means having three inputs and an output, a first input of which provides a control input for receiving an output signal from the first logic means, a second input of which is for receiving a second signal and a third input of which is for receiving the carry-in signal, for providing the carry-out signal in response to a predetermined logical operation; and second logic

means having a first input, and a second input for receiving an output signal from the first logic means for providing the sum output signal in response to a predetermined logical operation; the apparatus being characterized in that the second input of the selective gating means is connected to receive a bit signal of the second operand or a second output signal from the first logic means, and in that the first input of the second logic means is connected to receive the carry-in signal applied to the third input of the selective gating means.

In apparatus as set forth in the last preceding paragraph, it is preferred that the first logic means comprises exclusive-OR gate means providing said first input for said first operand and said second input for said second operand, and an output connected to the control input of the selective gating means and to the second input of the second logic means.

In apparatus as set forth in the last preceding paragraph, it is preferred that said second input of the exclusive-OR gate means is connected to said second input of said selective gating means.

In an alternative apparatus as set forth in the last preceding paragraph but one, it is preferred that the first logic means comprises AND gate means and exclusive-OR gate means, each providing a first input for said first operand and each providing a second input for said second operand, the AND gate means having its output connected to the second input of said selective gating means to supply said second output of said first logic means thereto, and the exclusive-OR gate means having its output connected to the first input of said selective gating means and to the second input of the second logic means.

In apparatus as set forth in any one of the last four immediately preceding paragraphs, it is preferred that the second logic means comprises exclusive-OR gate means.

In apparatus as set forth in any one of the last five immediately preceding paragraphs, it is preferred that the selective gating means comprises 2-to-1 MOS multiplexer means.

The present invention further provides an apparatus for adding first and second binary operands each having a nominal length of N bits and a carry-in signal, and for providing a sum output signal having N bits and a carry-out signal, said apparatus comprising first logic means having a first input coupled to a bit signal of the first operand and a second input coupled to a bit signal of the second operand for providing an output signal in response to a predetermined logical operation; second logic means having a first input for receiving the carry-in signal, and a second input whereby an output of the first logic means can be supplied thereto for providing the sum output signal in response to a predetermined logical operation; and selective gating means having three inputs and an output, a first input providing a control input and another of said three inputs being provided for receiving the carry-in signal, whereby to provide the carry-out signal in response to a predetermined logical operation; the apparatus being characterized in that the second input of the second logic means is connected to the output of the first logic means for providing the sum output signal as aforesaid, a second input of the selective gating means is connected to the second input of the first logic means for receiving the bit signal of the second operand, and said another of said three inputs provides the third input.

The present invention further provides an apparatus for adding first and second binary operands each having a nominal length of N bits, and a carry-in signal, and for providing a sum output signal having N bits and a carry-out signal, said apparatus comprising

N logic cells each for receiving a corresponding bit of each operand and providing a sum output signal, and a carry-out signal, each cell of the apparatus comprising first logic means comprising first and second gate means, each of which has a first input for receiving a corresponding bit signal of the first operand and a second input for receiving a corresponding bit signal of the second operand to provide first and second output signals respectively in response to a predetermined logical operation; selective gating means having a first, control, input for receiving the second output signal from the second gate means, a second signal input for receiving the first output signal from the first gate means, and a third signal input for receiving the carry-in signal, for providing the carry-out signal in response to a predetermined logical operation; and second logic means having a first input for receiving the carry-in signal, and a second input for receiving the second output signal of the second gate means to provide a carry-out signal in response to a predetermined logical operation; the apparatus being characterized in that the selective gating means of each cell is provided by a single 2-to-1 multiplexer, or its logical equivalent, and in that all N cells are alike.

The binary adder which is the subject of the present invention takes advantage of the easy access to all of the circuit's internal nodes which is possible on a large scale integrated (LSI) chip. Redundant logic elements have been essentially eliminated and the circuit is also configured to permit layout in a regular and compact array for an N-bit adder. The result is a reduced device count, compact size, and faster addition speed.

There now follows a detailed description which is to be read with reference to the accompanying drawings of a prior art adder apparatus and of two embodiments of the present invention; it is to be clearly understood that these embodiments have been selected for description to illustrate the invention by way of example and not by way of limitation.

In the accompanying drawings:-

Figure 1 illustrates the circuit diagram of a traditional 4-bit carry look-ahead adder with separate logic for the carry and sum paths;

Figures 2A and 2B illustrate a 2-to-1 multiplexer implemented with MOSFETS for use in an adder;

Figure 3 is a circuit diagram of an apparatus according to an embodiment of the present invention; and

Figure 4 is a circuit diagram of a further apparatus according to a second embodiment of the present invention.

In Figure 1 there is illustrated the circuit diagram of a traditional 4-bit carry look-ahead adder which is capable of anticipating the carry signal across multiple bits of addition. This is generally done in powers of two, such as four or sixteen, and permits the carry signal to skip across groups of bits so that the addition can be speeded up by powers of two. Separate logic is provided for the carry path 10 and the sum path 20. The inputs are a first operand $A_0$-$A_3$, a second operand $B_0$-$B_3$, and the carry-in signal $C_{in}$ on a line 30 from a prior adder cell. The outputs are the sum digit signal $D_0$-$D_3$ and carry-out signal $C_{out}$. Gates 31-34 are 2-input AND logic gates, gates 41-48 are 2-input EXCLUSIVE-OR logic gates, gate 50 is a 4-input AND logic gate, and devices 61-67 are 2-to-1 multiplexers (MUX).

The details of a particularly efficient 2-to-1 MUX 100 for use in such an adder are shown in Figures 2A and 2B. The input signals are $IN_0$, $IN_1$, and CONTROL on lines 130, 140 and 150, respectively, and the MUX 100 output signal on line 160 is OUT. When CONTROL is a logical 0 the P-channel MOSFET 110 is "on" and the N-channel MOSFET 120 "off" and $IN_0$ is connected to the OUT line. When the CONTROL signal on the line 150 is a logical 1 the N-channel $IN_1$ is connected to the OUT line. Thus, the Boolean expression for the MUX 100 is:

$$OUT = [(CONTROL)*(IN_1)] + [(\overline{CONTROL})*(IN_0)]$$

which is of the same form as the $C_i$ expression shown in the Boolean equations accompanying Table 1. It should be noted that it is well known in the art that the logical equivalent of a 2-to-1 MUX 100 can be constructed from standard logic gates.

Referring again to Figure 1, since this is the "first" adder cell, $C_{in}=0$ on line 30. If, for example, the A operand is 0011, the binary equivalent of 3, and the B operand is 0101, the binary equivalent of 5, it can readily be seen that the resulting sum on the D lines $D_0$-$D_3$ is 1000, the binary equivalent of 8. Since the sum is produced within the 4-digits $D_0$-$D_3$ available, $C_{out}=0$. In this traditional adder the MUXs 61, 62 and 63 provide the ripple path to create the carry signal $C_{out}$, and the MUXs 64, 65 and 66 provide the independent ripple path to create the sum signal $D_0$-$D_3$.

Figure 3 is the circuit diagram of a first embodiment of the present invention. A comparison of this Figure with the prior art circuit of Figure 1 illustrates the structural differences, and similarities, between the two circuits. The circuit of Figure 3 has only a single ripple path across the MUXs 210, 211, 212, 213 instead of the two ripple paths of the circuit of Figure 1 and so produces a cost saving, simplification and greater efficiency in its structure, as compared with the prior art. Additionally, the MUX 210 of Figure 3, which is equivalent to the MUX 64 of Figure 1, has its output connected to the '1' input of the MUX 211, instead of the output of the AND gate 231 being connected thereto, the latter output being connected to the '0' input of the MUX 210. Each of the gates 246, 247, 248 then receives its carry signal as the output from the MUX 210, 211, 212 respectively. In this manner the number of MUXs is reduced from seven to five. The gates 231-234 and 241-244 have the same function

as the gates 31-34 and 41-44 of the circuit of Figure 1. Similarly, the MUXs 212, 213, 214 and the gates 245-248 and 250 are equivalent to the MUXs 62,63,67, and the gates 45-48 and 50 of Figure 1.

Figure 4 shows a second embodiment of the present invention. MUX's 210, 211, 212 and 213 provide a single ripple path for both the sum signals $D_0$-$D_3$ and carry signal $C_{out}$, as in the embodiment of Figure 3. Thus, again, by using the invention a 4-bit adder is implemented with only five MUXs (210-214) as shown in Figure 4, rather than the seven MUXs (61-67) required in the prior art as shown in Figure 1.

However, Figure 4 also shows the elimination of the AND gates 31-34 used in Figure 1. The logic function served by the AND gates 31-34 has been eliminated by the full utilization of the power of the 2-to-1 multiplexers which are required for producing the sum and carry functions. As shown in Figure 3 the B operand $B_0$-$B_3$ is used directly as the $G_0$-$G_3$ inputs to the MUXs 210-213 as a further logic reducing method. The result is an even more compact adder with fewer logic elements.

It is clear to one skilled in the art that the disclosed invention can be implemented in technologies other than MOS.

CLAIMS

1. Apparatus for adding first and second binary operands each having a nominal length of N bits and a carry-in signal, and for providing a sum output signal having N bits and a carry-out signal, said apparatus comprising:

first logic means (231,232,233,234; 241,242,243, 244) having a first input coupled to a bit signal of the first operand ($A_0$-$A_3$) and a second input coupled to a bit signal of the second operand ($B_0$-$B_3$) for providing one or more output signals in response to predetermined logical operation;

selective gating means (210, 211, 212, 213) having three inputs and an output, a first input of which provides a control input for receiving an output signal from the first logic means, a second input of which is for receiving a second signal and a third input of which is for receiving the carry-in signal, for providing the carry-out signal in response to a predetermined logical operation; and

second logic means (245, 246, 247, 248) having a first input, and a second input for receiving an output signal from the first logic means for providing the sum output signal in response to a predetermined logical operation;

the apparatus being characterized in that the second input of the selective gating means is connected to receive a bit signal of the second operand or a second output signal from the first logic means, and in that the first input of the second logic means is connected to receive the carry-in signal applied to the third input of the selective gating means.

2. Apparatus according to claim 1 characterized in that the first logic means comprises exclusive-OR gate means providing said first input for said first operand and said second input for said second operand, and an output connected to the control input of the selective gating means and to the second input of the second logic means.

3. Apparatus according to claim 2 characterized in that said second input of the exclusive-OR gate means is connected to said second input of said selective gating means.

4. Apparatus according to claim 1 characterized in that the first logic means comprises AND gate means and exclusive-OR gate means, each providing a first input for said first operand and each providing a second input for said second operand, the AND gate means having its output connected to the second input of said selective gating means to supply said second output of said first logic means thereto, and the exclusive-OR gate means having its output connected to the first input of said selective gating means and to the second input of the second logic means.

5. Apparatus according to any one of the preceding claims characterized in that the second logic means comprises exclusive-OR gate means.

6. Apparatus according to any one of the preceding claims characterized in that the selective gating means comprises 2-to-1 MOS multiplexer means.

7. An apparatus for adding first and second binary operands each having a nominal length of N bits and a carry-in signal, and for providing a sum output signal having N bits and a carry-out signal, said apparatus comprising:

first logic means (241,242,243,244) having a first input coupled to a bit signal of the first operand ($A_{(0-3)}$) and a second input coupled to a bit signal of the second operand ($B_{(0-3)}$) for providing an output signal in response to predetermined logical operation;

second logic means (245,246,247,248) having a first input for receiving the carry-in signal, and a second input whereby an output of the first logic means can be supplied thereto for providing the sum output signal in response to a predetermined logical operation; and

selective gating means (210,211,212,213) having three inputs and an output, a first input providing a control input and another of said three inputs being provided for receiving the carry-in signal, whereby to provide the carry-out signal in response to a predetermined logical operation;

the apparatus being characterized in that the second input of the second logic means is connected to the output of the first logic menas for providing the sum output signal as aforesaid, a second input of the selective gating means is connected to the second input of the first logic means for receiving the bit signal of the second operand, and said another of said three inputs provides the third input.

8. An apparatus for adding first and second binary operands, each .aving a nominal length of N bits and a carry-in signal, and for providing a sum output signal having N bits and a carry-out signal, said apparatus comprising:

N logic cells each for receiving a corresponding

bit of each operand and providing a sum output signal, and a carry-out signal, each cell of the apparatus comprising

first logic means comprising first and second gate means (231,241,232,242,233,243,234,244), each of which has a first input for receiving a corresponding bit signal of the first operand ($A_0$-$A_3$) and a second input for receiving a corresponding bit signal of the second operand ($B_0$-$B_3$), to provide first and second output signals respectively in response to a predetermined logical operation;

selective gating means (210,211,212,213) having a first, control, input for receiving the second output signal from the second gate means, a second signal input for receiving the first output signal from the first gate means, and a third signal input for receiving the carry-in signal, for providing the carry-out signal in response to a predetermined logical operation; and

second logic means (245,246,247,248) having a first input for receiving the carry-in signal, and a second input for receiving the second output signal of the second gate means to provide a carry-out signal in response to a predetermined logical operation;

the apparatus being characterized in that the selective gating means of each cell is provided by a single 2-to-1 multiplexer, or its logical equivalent, and in that all N cells are alike.

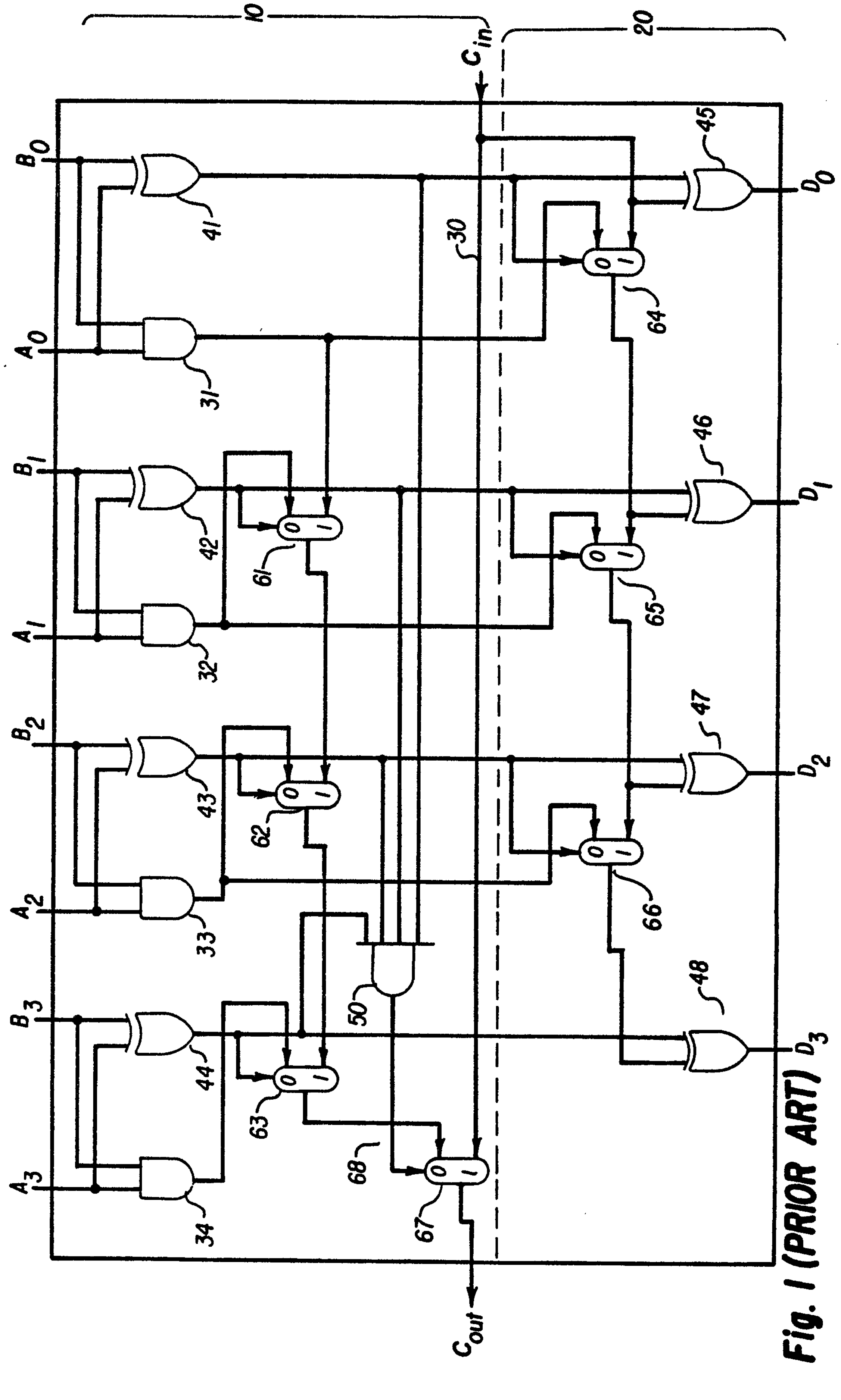


Fig. 1 (PRIOR ART)

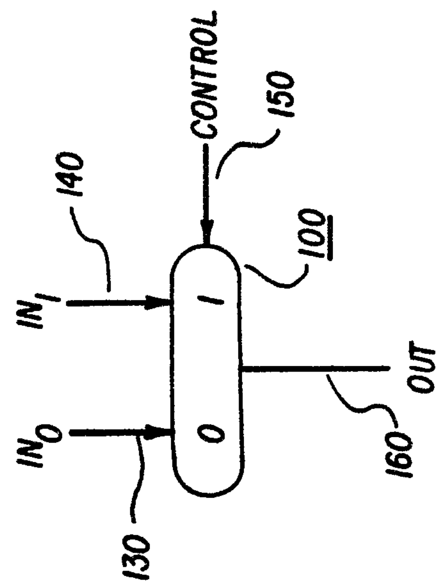
CONTROL
150
140
IN1
100
1
0
IN0
OUT
160
130

Fig. 2B

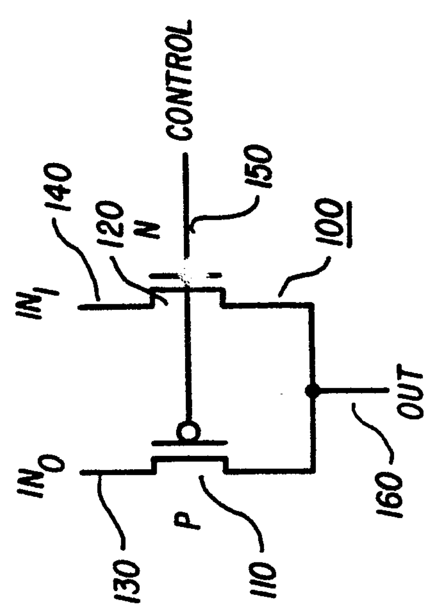
CONTROL
150
N
120
140
IN1
100
OUT
160
IN0
P
130
110

Fig. 2A

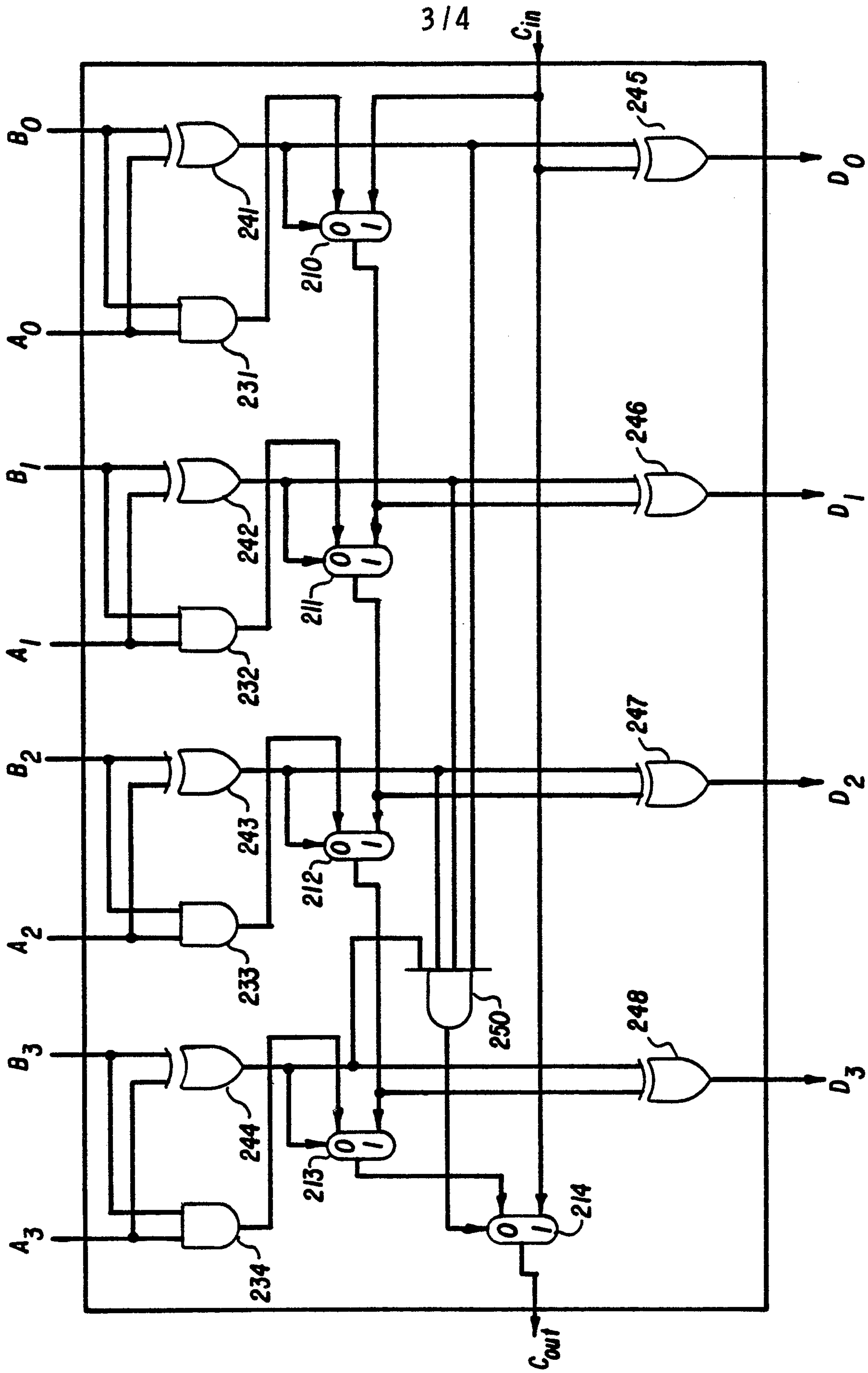

$C_{in}$
$B_0$
$A_0$
$B_1$
$A_1$
$B_2$
$A_2$
$B_3$
$A_3$
241
231
242
232
243
233
244
234
210
211
212
213
214
245
246
247
248
250
$D_0$
$D_1$
$D_2$
$D_3$
$C_{out}$


Fig. 3

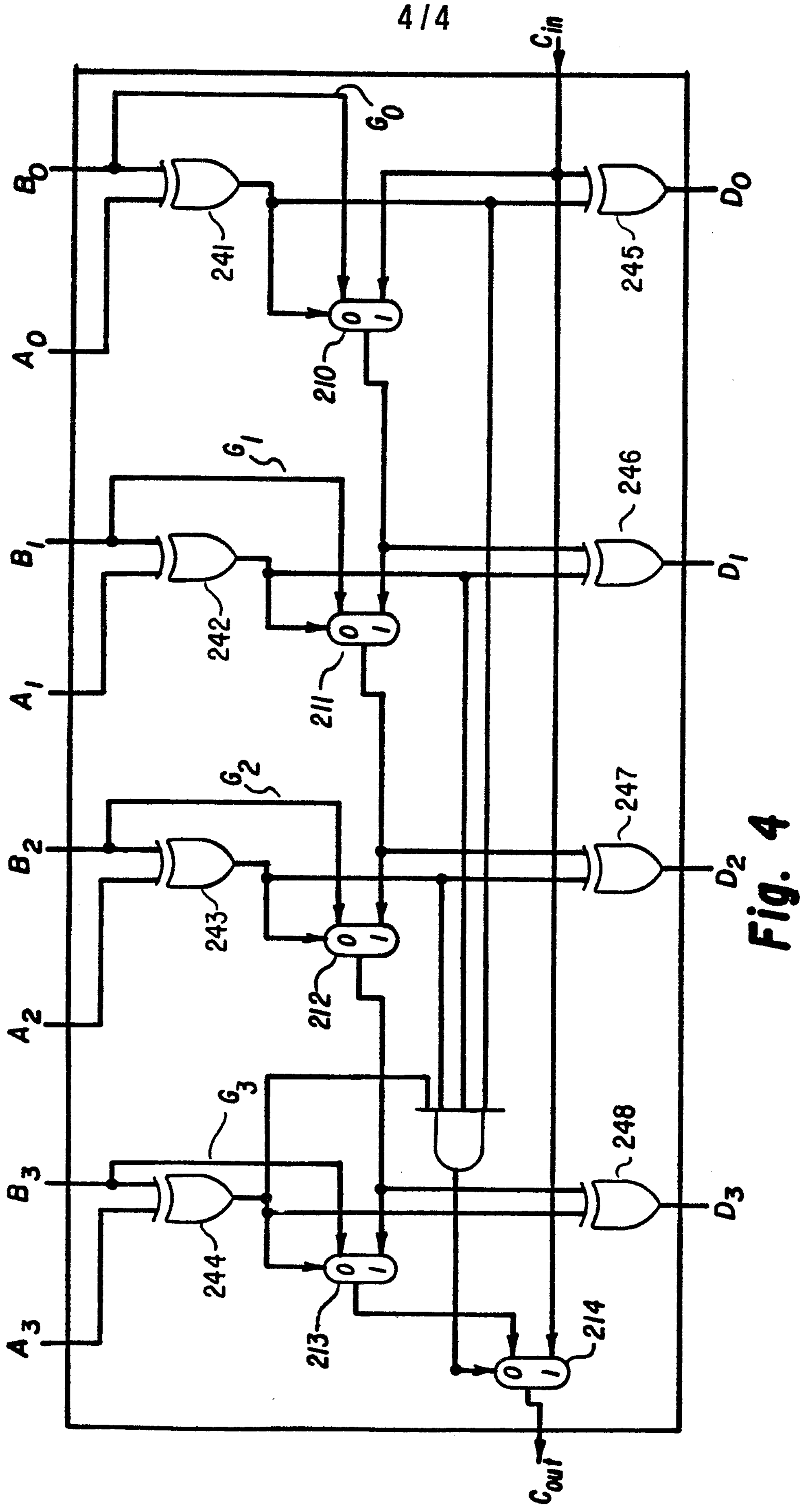
$C_{in}$
$G_0$
$B_0$
$A_0$
241
210
245
$D_0$
$G_1$
$B_1$
$A_1$
242
211
246
$D_1$
$G_2$
$B_2$
$A_2$
243
212
247
$D_2$
$G_3$
$G_3$
$B_3$
$A_3$
244
213
248
$D_3$
214
$C_{out}$

Fig. 4